# FASCICULE DE BREVET EUROPEEN

(11) **EP 1 546 595 B1**
(45) Date de publication et mention de la délivrance du brevet: **09.07.2008**
(21) Numéro de dépôt: 02774929.0
(22) Date de dépôt: 25.09.2002
(51) Int. Cl.: F16L 11/08, B32B 1/08

(54) **TUYAU, EN PARTICULIER POUR UN CIRCUIT D'ADMISSION D'AIR DANS UN MOTEUR DE VEHICULE AUTOMOBILE**
ROHR, INSBESONDERE FÜR LUFTEINLASSKREISLÄUFE EINES FAHRZEUGMOTORS
PIPE WHICH IS INTENDED, IN PARTICULAR, FOR AN AIR INTAKE CIRCUIT IN A MOTOR VEHICLE ENGINE

(43) Date de publication de la demande: 29.06.2005
(73) Titulaire: HUTCHINSON, 75008 Paris (FR)
(72) Inventeur: HOUEE, Sandrine, F-45120 Cepoy (FR)
(74) Mandataire: Bolinches, Michel Jean-Marie
(86) Numéro de dépôt international: PCT/FR2002/003267
(87) Numéro de publication internationale: WO 2004/029493

(56) Documents cités:
- EP-A- 0 564 231
- EP-A- 0 739 712
- DE-A- 4 215 778
- US-A- 4 998 564

## Description

L'invention concerne la structure d'un tuyau, en particulier pour un circuit d'admission d'air dans un moteur de véhicule automobile.

D'une manière générale, un tuyau qui transporte un fluide sous forme liquide ou gazeuse doit notamment résister à la pression, à la température et à l'agressivité du fluide transporté d'une part, et à l'agressivité du milieu environnant d'autre part.

Dans le cas d'un circuit d'admission d'air pour moteur turbocompressé d'un véhicule automobile, le fluide est de l'air chaud à une pression de l'ordre de 1,5 à 2 bars et à une température de l'ordre de 100°C à 200°C. Cependant, cet air chaud est chargé d'huile, en particulier celle utilisée pour lubrifier le turbocompresseur. La présence de cette huile impose un tuyau dont la couche interne doit résister à l'effet agressif de l'huile.

D'une manière générale et à la satisfaction des constructeurs automobiles, le matériau couramment utilisé jusqu'à maintenant est un copolymère d'éthylène et d'acide acrylique, en particulier du VAMAC^{®}.

Par ailleurs, la température sous le capot moteur tendant à augmenter de plus en plus, le tuyau d'admission d'air est placé dans un environnement extérieur de plus en plus chaud, si bien que le tuyau doit résister à une température extérieure de l'ordre de 150° à 170°C. Cependant, comme le VAMAC^{®} peut supporter une telle température d'une part, et qu'il peut y avoir une atmosphère légèrement chargé d'huile sous le capot moteur d'autre part, les constructeurs automobiles ont quasiment imposé que la couche externe du tuyau soit globalement de la même constitution que celle de sa couche interne.

Concrètement, la structure d'un tuyau d'admission d'air selon l'art antérieur qui vient d'être évoqué n'est pas sans présenter des inconvénients, en particulier :
- une mauvaise tenue à froid qui se traduit par un durcissement du tuyau pouvant conduire à un démanchement de la connectique de raccordement ;
- une rigidité trop importante aux températures normales de fonctionnement, ce qui n'est pas un facteur d'amortissement des vibrations ; et
- un prix de revient relativement élevé.

Le but de l'invention est de concevoir une nouvelle structure de tuyau, en particulier dans le choix des matériaux utilisés pour pallier notamment les inconvénients précités.

A cet effet, l'invention propose un tuyau, en particulier pour un circuit d'admission d'air dans un moteur de véhicule automobile, tuyau qui est caractérisé par une structure comprenant au moins :
- une couche interne formée à partir d'un matériau polaire constitué au moins en partie par un élastomère réticulable aux amines ou au peroxyde et choisi parmi les copolymères d'éthylène et d'acide acrylique, parmi les copolymères d'éthylène et d'acétate de vinyle ou parmi les polymères d'acrylate,
- une couche externe présentant de la souplesse et formée à partir d'un matériau apolaire réticulabe au peroxyde, et
- une couche intermédiaire pour faciliter l'adhésion entre les couches interne et externe, qui est constituée à partir d'un mélange de matériaux réticulables au peroxyde.

D'une manière générale, la couche intermédiaire ou d'adhérisation est avantageusement réalisée à partir d'un mélange de matériaux réticulables au peroxyde, comme cela est le cas pour un EPDM par exemple qui a été choisi pour donner plus de souplesse au tuyau.

Selon un exemple de réalisation, la couche intermédiaire est un mélange d'EPDM et d'un copolymère d'éthylène et d'acide acrylique tel que du VAMAC^{®} D.

Avantageusement, un tricot en aramide par exemple est intercalé entre la couche intermédiaire et la couche externe du tuyau pour assurer la tenue en pression.

Ainsi, un tuyau selon l'invention permet d'allier une bonne tenue à l'huile et à la chaleur en intérieur d'une part, à la température et à l'environnement extérieur d'autre part, tout en lui conférant une bonne souplesse aux températures normales de fonctionnement, une bonne tenue aux basses températures jusqu'au -40°C et une meilleure aptitude pour limiter la transmission des bruits, grâce à la présence de la couche externe souple.

Par ailleurs, un tel tuyau est d'un prix de revient moins élevé car un EPDM utilisé en couche externe est un matériau nettement plus avantageux que le VAMAC utilisé jusqu'à maintenant sur quasiment toute l'épaisseur du tuyau.

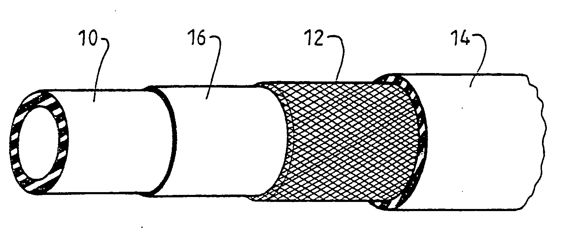

D'autres avantages, caractéristiques et détails de l'invention ressortiront du complément de description qui va suivre en référence au dessin annexé, donné à titre d'exemple et qui illustre un tuyau conforme à l'invention.

Le tuyau T tel qu'illustré sur le dessin annexé est un exemple de réalisation d'un tuyau ayant une structure selon l'invention, à savoir un tuyau ayant au moins une couche interne 10, une couche intermédiaire 12, un tricot 14 et une couche externe 16.

La structure d'un tel tuyau a été particulièrement conçue pour transporter un fluide tel que de l'air chargé d'huile dans un circuit d'admission d'air pour un moteur de véhicule automobile.

Dans cette application, on réalise la couche interne 10 à partir d'un matériau polaire qui peut être un copolymère d'éthylène et d'acide acrylique, en particulier du VAMAC^{®} G, un copolymère d'éthylène et d'acétate de vinyle couramment dénommé EVA, ou un polymère d'acrylate couramment dénommé ACM. De tels matériaux ont des propriétés adaptées pour résister à l'agressivité des vapeurs d'huile présentes dans l'air transporté par le tuyau T.

Ces matériaux polaires se caractérisent notamment par la présence d'interactions électroniques fortes qui sont en l'espèce générées par l'effet d'une fonction acide ou acrylate, ce qui entraîne une déformation du nuage électronique et la création de dipôles.

La couche externe 16 qui forme le revêtement du tuyau T a essentiellement pour fonction de donner de la souplesse au tuyau T. Le choix du matériau utilisé pour réaliser cette couche externe 16 s'est porté sur un EPDM qui est un matériau élastomère apolaire. A titre d'exemple, l'EPDM peut être du KELTAN^{®} 740, du KELTAN^{®} 509X100 ou du VISTALON^{®} 7000.

Un matériau apolaire se caractérise par une chaîne composée de carbones et d'hydrogènes qui ne génèrent pas une déformation du nuage électronique, si bien que le choix d'un matériau polaire qui se trouve imposé pour sa tenue à l'huile, et le choix d'un matériau apolaire tel qu'un EPDM qui convient en terme de souplesse, font que le(s) matériau(x) utilisé(s) pour réaliser la couche intermédiaire doit être compatible avec des comportements électroniques différents des matériaux polaires et apolaires.

La couche intermédiaire 12 a pour fonction d'assurer l'adhérisation entre les couches interne 10 et externe 16. D'une manière générale, on sait qu'une couche intermédiaire faite d'un mélange des matériaux constitutifs des deux couches à assembler l'une à l'autre peut favoriser l'adhérisation.

Ainsi, lorsque la couche interne 10 est réalisée en VAMAC^{®} G qui est un matériau réticulable aux amines, alors que la couche externe 16 est réalisée en EPDM qui est un matériau réticulable au peroxyde, un mélange de ces deux matériaux pour constituer la couche intermédiaire 12 ne peut pas être envisagé.

Le choix du matériau pour la réalisation de la couche externe 16 s'étant porté sur un EPDM, la couche intermédiaire 12 est réalisée sur la base d'un mélange d'EPDM et d'un autre matériau qui soit à la fois réticulable au peroxyde et compatible avec le VAMAC^{®} . Selon l'invention, cet autre matériau est du VAMAC^{®} D qui satisfait aux conditions précitées, et le mélange peut être réalisé dans des proportions sensiblement égales d'EPDM et de VAMAC^{®} D.

La définition de la composition du mélange pour la réalisation de la couche intermédiaire 12 pourrait inciter à réaliser également la couche interne 10 en VAMAC^{®} D, mais ce matériau ne tient pas suffisamment à la pression alternée après extrusion.

Lorsque la couche interne 10 est réalisée à partir d'un copolymère d'éthylène et d'acétate de vinyle qui est réticulable au paroxyde ou d'un polymère d'acrylate qui est un matériau réticulable aux amines, la couche intermédiaire 12 peut avoir la même constitution que précédemment.

Le tricot 14 qui est intercalé entre la couche intermédiaire 12 et la couche externe 16 est destiné à assurer la tenue en pression du tuyau T. Il peut être réalisé en aramide par exemple.

Avec les matériaux utilisés et tels que définis précédemment, la couche intermédiaire 12 permet d'obtenir un niveau d'adhérence entre les couches interne 10 et externe 16, qui est de l'ordre de 2 daN/cm alors qu'il ne serait qu'à peine de 0,5 daN/cm sans la présence de cette couche 12.

Avantageusement, le procédé de fabrication du tuyau T consiste à coextruder dans une première phase la couche interne 10 et la couche intermédiaire 12, et dans une deuxième étape la couche d'EPDM avec interposition du tricot 14.

Dans un circuit d'admission d'air pour moteur de véhicule automobile, le tuyau peut avoir un diamètre interne allant de 15mm à 50mm, et présente une épaisseur de l'ordre de 5mm, la couche interne ayant une épaisseur de l'ordre de 1,5mm, la couche intermédiaire de l'ordre de 0,5mm et la couche externe de l'ordre de 3mm.

Bien entendu, le tuyau selon l'invention peut être également utilisé dans d'autres applications où le fluide transporté n'est pas nécessairement de l'air.

## Revendications

1. Tuyau, en particulier pour un circuit d'admission d'air dans un moteur de véhicule automobile, tuyau **caractérisé par** une structure comprenant au moins :
- une couche interne (10) formée à partir d'un matériau polaire constitué au moins en partie par un élastomère réticulable aux amines ou au peroxyde et choisi parmi les copolymères d'éthylène et d'acide acrylique, parmi les copolymères d'éthylène et d'acétate de vinyle ou parmi les polymères d'acrylate,
- une couche externe (16) présentant de la souplesse formée à partir d'un matériau apolaire réticulable au peroxyde, et
- une couche intermédiaire (12) pour faciliter l'adhésion entre les couches interne et externe (10, 16), qui est constituée à partir d'un mélange de matériaux réticulables au peroxyde.

2. Tuyau selon la revendication 1, **caractérisé en ce que** la couche intermédiaire (12) comprend un mélange d'EPDM et d'un copolymère d'éthylène et d'acide acrylique, tel que du VAMAC^{®} D.

3. Tuyau selon la revendication 1 ou 2, **caractérisé en ce que** la couche interne (10) est réalisée en un copolymère d'éthylène et d'acide acrylique qui est réticulable aux amines, tel que du VAMAC^{®} G.

4. Tuyau selon la revendication 1 ou 2, **caractérisé en ce que** la couche interne (10) est réalisée en un copolymère d'éthylène et d'acétate de vinyle ou EVA, qui est réticulable au peroxyde.

5. Tuyau selon la revendication 1 ou 2, **caractérisé en ce que** la couche interne (10) est réalisée à partir d'un polymère d'acrylate dénommé ACM qui est réticulable aux amines.

6. Tuyau selon l'une quelconque des revendications précédentes, **caractérisé en ce que** la couche externe (16) est réalisée en EPDM.

7. Tuyau selon l'une quelconque des revendications précédentes, **caractérisé en ce qu'**un tricot (14) est intercalé entre la couche intermédiaire (12) et la couche externe (16).

8. Tuyau selon la revendication 7, **caractérisé en ce que** le tricot (14) est en aramide.

9. Tuyau selon une des revendications précédentes, **caractérisé en ce que** le tuyau a une épaisseur de l'ordre de 5mm, la couche interne (10) ayant une épaisseur de l'ordre de 1,5mm, la couche intermédiaire (12) de l'ordre de 0,5mm et la couche externe (16) de l'ordre de 3mm.

## Claims

1. Pipe, in particular for an air inlet circuit in a motor vehicle engine, which pipe is **characterised by** a structure comprising at least:
- an inner layer (10) which is formed from a polar material which is constituted at least partially by an elastomer which can be cross-linked with amines or a peroxide and which is selected from the co-polymers of ethylene and acrylic acid, from the co-polymers of ethylene and vinyl acetate or from the polymers of acrylate,
- an outer layer (16) which has flexibility and which is formed from an apolar material which can be cross-linked with a peroxide, and
- an intermediate layer (12) which is intended to facilitate the adhesion between the inner and outer layers (10, 16) and which is constituted from an admixture of materials which can be cross-linked with a peroxide.

2. Pipe according to claim 1, **characterised in that** the intermediate layer (12) comprises an admixture of EPDM and a co-polymer of ethylene and acrylic acid, such as VAMAC^{®} D.

3. Pipe according to claim 1 or 2, **characterised in that** the inner layer (10) is produced from a co-polymer of ethylene and acrylic acid which can be cross-linked with amines, such as VAMAC^{®} G.

4. Pipe according to claim 1 or 2, **characterised in that** the inner layer (10) is produced from a co-polymer of ethylene and vinyl acetate or EVA, which can be cross-linked with a peroxide.

5. Pipe according to claim 1 or 2, **characterised in that** the inner layer (10) is produced from a polymer of acrylate known as ACM which can be cross-linked with amines.

6. Pipe according to any one of the preceding claims, **characterised in that** the outer layer (16) is produced from EPDM.

7. Pipe according to any one of the preceding claims, **characterised in that** a knitted fabric (14) is interposed between the intermediate layer (12) and the outer layer (16).

8. Pipe according to claim 7, **characterised in that** the knitted fabric (14) is of aramide.

9. Pipe according to any one of the preceding claims, **characterised in that** the pipe has a thickness in the order of 5 mm, the internal layer (10) having a thickness in the order of 1.5 mm, the intermediate layer (12) in the order of 0.5 mm and the outer layer (16) in the order of 3 mm.

## Patentansprüche

1. Schlauch, insbesondere für einen Lufteinlasskreislauf eines Fahrzeugmotors, wobei der Schlauch **gekennzeichnet ist durch** einen Aufbau, der mindestens enthält:
- eine Innenschicht (10), die aus einem polaren Material gebildet ist, das sich mindestens teilweise aus einem mit Aminen oder Peroxid vernetzbaren Elastomeren gebildet ist und ausgewählt ist aus den Ethylen-Acrylsäure-Copolymeren, aus den Ethylen-Venylacetat-Copolymeren oder aus den Acrylatpolymeren,
- eine äußere Schicht (16), die die Biegsamkeit aufweist und aus einem apolaren, mit Peroxid vernetzbaren Material gebildet ist, und
- eine Zwischenschicht (12) zur Erleichterung der Haftung zwischen den Innen-und Außenschichten (10, 16), die aus einer Mischung von Materialien gebildet ist, die mit Peroxid vernetzbar sind.

2. Schlauch nach Anspruch 1, **dadurch gekennzeichnet, dass** die Zwischenschicht (12) ein Gemisch von EPDM und einem Ethylen-Acrylsäure-Copolymeren, wie zum Beispiel VAMAC^{®}D, enthält.

3. Schlauch nach Anspruch 1 oder 2, **dadurch gekennzeichnet, dass** die Innenschicht (10) aus einem Ethylen-Acrylsäure-Copolymeren, das mit Aminen vernetzbar ist, wie zum Beispiel VAMAC^{®}G, hergestellt ist.

4. Schlauch nach Anspruch 1 oder 3, **dadurch gekennzeichnet, dass** die Innenschicht (10) aus einem Ethylen-Venylacetat-Copolymeren oder EVA hergestellt ist, das mit Peroxid vernetzbar ist.

5. Schlauch nach Anspruch 1 oder 2, **dadurch gekennzeichnet, dass** die Innenschicht (10) aus einem ACM genannten Acrylatpolymeren, das mit Arminen vernetzbar ist, hergestellt ist.

6. Schlauch nach einem der ausstehenden Ansprüche, **dadurch gekennzeichnet, dass** die Außenschicht (16) aus EPDM hergestellt ist.

7. Schlauch nach einem der vorstehenden Ansprüche, **dadurch gekennzeichnet, dass** ein Trikot (14) zwischen der Zwischenschicht (12) und der Außenschicht (16) eingelagert ist.

8. Schlauch nach Anspruch 7, **dadurch gekennzeichnet, dass** das Trikot (14) aus Aramid ist.

9. Schlauch nach einem der vorstehenden Ansprüche, **dadurch gekennzeichnet, dass** der Schlauch eine Dicke in der Größenordnung von 5 mm besitzt, die Innenschicht (10) eine Dicke in der Größenordnung von 1,5 mm, die Zwischenschicht (12) eine Dicke in der Größenordung von 0,5 mm und die Außenschicht (16) eine Dicke in der Größenordnung von 3 mm besitzen.
